# EUROPEAN PATENT APPLICATION

(11) **EP 2 248 432 A1**
(43) Date of publication of application: **10.11.2010**
(21) Application number: 10425151.7
(22) Date of filing: 05.05.2010
(51) Int. Cl.: A23N 15/04, B26D 3/26

(54) **Device and method for determining the edible portion percentage of asparagus**

(30) Priority: 06.05.2009 IT RM20090218
(71) Applicant: Consiglio per la Ricerca e la Sperimentazione In Agricoltura (C.R.A.), 00184 Roma (IT)
(72) Inventor: Crivelli, Giuseppe, 00184 Roma (IT)
(74) Representative: Santi, Filippo

(57) **Abstract**

The invention concerns a device for determining the percentage of the edible portion of a long and narrow fibrous food, utilising a blade (3) pressing with its cutting side on the fibrous food fixed on a support surface (9) from above with respect to said support surface, **characterised in that:**
- said support surface (9) is fixed on a slide (1) that is longitudinally slidable along a predetermined direction of the plane including the same support surface (9);
- there are comprised driving means of said slide (1);
- there are comprised driving means of said blade (3), that are suitable to move away from said fibrous food, or to bring it nearer to said fibrous food till the blade exerts, on the fibrous part, a force such to compress it without cutting it;

said driving means of said slide (1) and said driving means of said blade (3) being suitable to act simultaneously so that the blade (3) slides on said fibrous food till it arrives to the edible part and separates it by pulling it from the rest of the fibrous food.

The invention further concerns the relevant method for determining the percentage of the edible portion of a long and narrow fibrous food.

## Description

The present invention regards a device and a method for determining the edible portion percentage of the asparagus.

More in details, the present invention regards a device and the corresponding method able to emulate the work of the asparagus taster that determines and separates the edible part portion from the fibrous portion by means of combined actions of compression and dragging, providing in this manner an objective determination instead of a subjective one.

The food products quality is the main requirement demanded by the consumer. It is the result combination of more factors among which the principal ones are the colour, the flavour and the consistency. In case of asparaguses there is an additional factor, constituted by the edible portion, that so far has not been considered since it is not visibly valuable owing to the lacking of a specific measurement device. The edible portion represents the eatable product quantity, that is an element of undisputed importance, highly appreciated and sought-after by the consumer.

The availability of variety having an elevated percentage of eatable product implies, in fact, a saving on the purchase, the manufacture waste reduction and positive effects on both the environment and waste discharge costs.

The asparagus is the vegetable with a great fibrous part percentage, that for some green variety can arrive even until 60% of the turion (eatable part of the asparagus).

Research works conducted until now, whose results are described in literature [1, 2], regard the measurement of the fibrousity by means the shearing stress determination, a factor that does not furnishes precise indications on the effectively eatable turion quantity, because by the cut it is not possible to have a net separation between edible and fibrous parts.

Objective of the present invention is to provide a device for the determination of the ratio between edible and fibrous parts of an asparagus, that goes over the disadvantages and resolves the prior art problems.

It is further specific object of the present invention a device for the objective determination of the ratio between edible and fibrous parts of an asparagus, that goes over the disadvantages and resolves prior art problems.

It is subject-matter of the present invention a devicefor determining the percentage of the edible portion of a long and narrow fibrous food, utilising a blade pressing with its cutting side on the fibrous food fixed on a support surface from above with respect to said support surface, **characterised in that:**
- said support surface is fixed on a slide that is longitudinally slidable along a predetermined direction of the plane including the same support surface;
- there are comprised driving means of said slide;
- there are comprised driving means of said blade, that are suitable to move away from said fibrous food, or to bring it nearer to said fibrous food till the blade exerts, on the fibrous part, a force such to compress it without cutting it;
said driving means of said slide and said driving means of said blade being suitable to act simultaneously so that the blade slides on said fibrous food till it arrives to the edible part and separates it by pulling it from the rest of the fibrous food.

Preferably according to the invention, said fibrous food is fixed on said slide by means of a toothed clamp that clamps it on the rear fibrous part.

Preferably according to the invention, said driving means of the slide are automatic-operated means, being further comprised hand-operated driving slide comprising a crank, gear and rack device.

Preferably according to the invention, on the blade edge opposite to the end facing said support surface, there are provided means suitable to house a series of weights that can be varied in number and combined to modify the total weight of the blade, to adapt the pressure exerted as a function of the analyzed fibrous food type.

Preferably according to the invention, said blade presses on the fibrous food with a blade end-part incidence angle of around 45° with respect to the slide, calculated anti-clockwise.

Preferably according to the invention, said fibrous food is an un asparagus.

It is further subject-matter of the present invention a method for determining the percentage of the edible portion of a long and narrow fibrous food, utilising a blade pressing with its cutting side on the fibrous food fixed on a support surface, **characterised in that** it performs the following steps:
A. making the blade press, from above with respect to the support surface, on said fibrous food, exerting a pressure such to avoid the cut of the fibrous food;
B. dragging said support surface along an horizontal direction in the geometrical plane of the support surface till said blade arrives at the edible part and detaches it from the rest of the fibrous food.

Preferably according to the invention, the method is executed on an asparagus.

Preferably according to the invention, said blade presses on the fibrous food with a negative incidence angle.

Preferably according to the invention, said negative incidence angle is of about 45 °.

The invention will be now described by way of illustration but not by way of limitation, with particular reference to the figures of the enclosed drawings, wherein:
- figure 1 shows a photo of a device prototype according to the invention;
- figure 2 shows a scheme of a device embodiment according to the invention for the asparagus treatment, in the working phase; in (a) the device is shown in the starting position with the trolley that is completely rear shifted and movable in the arrow sense; in (b) the device is shown in the stop position with the trolley completely returned;
- figure 3 shows a front view of the device according to figure 2, with, highlighted by the arrow, a blade guillotine movement for dividing the edible asparagus part;
- figure 4 shows a prior art device for measuring the edible parts on crude turions by means of the shearing stress measurement;
- figure 5 shows the relation between the turion portion effectively consumed by the tasters and the edible part determined by the device according to the invention.

The numerous carried-out experimentations have permitted to realise a device according to the invention, that is named "edible-metre" in the following, that determines the effective usable asparagus portion, since it acts on the product after cooking, reproducing compression and dragging actions operated by the consumer.

The "edible-meter" according to the invention is a machine conceived to be a support in the research of the asparagus variety selection on the basis of the fibrous and pulpy parts contents.

Aim of the machine is to mechanically separate, by means of removal, the pulpy eatable part so as to analyse both quantities in terms of weight.

The device according to the invention is conceived for operating, in particular, on the calibrated product and cooked using standard procedures, in order to reproduce the conditions in which the consumer finds himself at the moment of the asparagus use.

The research on the device has been based on three principal factors:
1. maximum mechanical action repeatability between subsequent samplings;
2. maximum removal effect consistency with the dimensional characteristics of the asparagus sample;
3. maximum automatism consistent with acceptable realization costs.

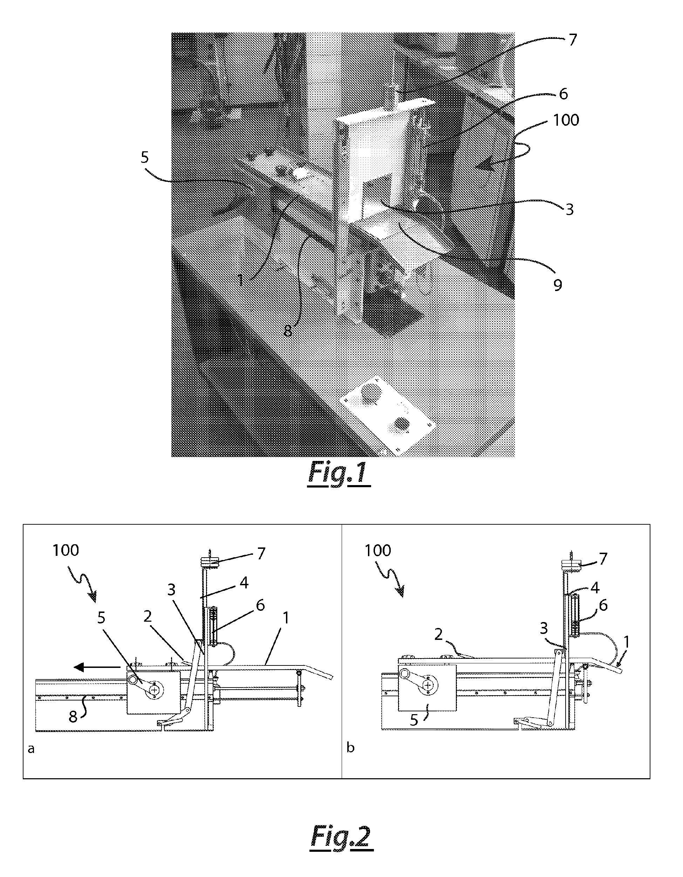

Referring to figure 1, the device according to the invention, in one of its particular embodiment, has been entirely realised in carpentry and adjustment; zinced ferrous materials has been utilised for the bed and the moving members; on the contrary, stainless steel plates have been utilised for all the parts in contact with humid asparagus samples.

In the embodiment of figure 1, the edible-meter is arranged on a support base equipped of starting (black button) and security stop (mushroom-shaped red button) controls.

The operating principle is based on a trolley working with alternating movement, equipped with vertical sliding blade, as shown in figure 2.

The trolley 1 longitudinally slides on two rail guides 8; a stainless steel plate 9 has been fixed on it, able to house the asparagus sample; this last is fixed on the trolley by means a serrated pliers 2 that blocks it on the rear fibrous part.

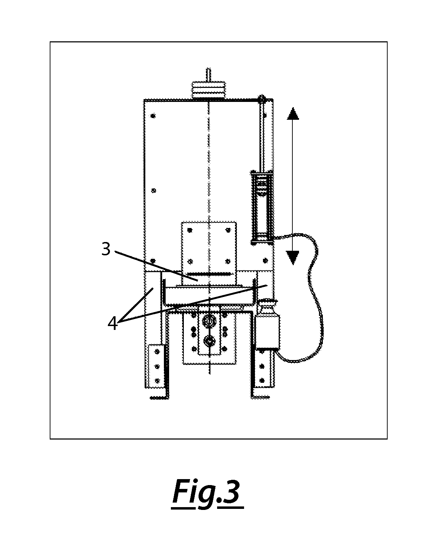

There is a transversal blade 3 - better shown in figure 3 - translating in the vertical plane as a guillotine thanks to two linear guides 4 with ball bearings (not shown). Nevertheless, the blade 3 is not for cutting the asparagus, but only for exerting a suitable pressure, the separation of the edible part being consequent to the combination of said pressure with the trolley movement 1.

The movement of the trolley 1 is of a pneumatic type; it is, however, provided that the manual action, useful in case of adjustement actions or in case of technical unexpected events such as the electrical energy lack. The manual movement acts on the only translation of the longitudinal slide by utilising a handle means 5, gear and crank. During the service automatic movement, this handle means is removed in order not to be a danger for the operators.

Between a sample and the subsequent, when the tool is in waiting position, the transversal blade 3 is completely in the up position, so as to allow the operator to simply fix the turion by means of the suitable tweezers 2. In this condition, the machine is ready for the sampling that will take place by pressing the appropriate starting button.

The functioning steps of the machine are:
1. rapid advancing movement of the longitudinal slide 1 in order to bring the asparagus sample in position under the blade, as shown in figure 2a;
2. blade fall 3 that leans on the asparagus with a rate controlled by a viscous hydraulic regulator 6, in order to avoid the impact cut of the stalk;
3. return of the longitudinal slide in the starting position, as shown in figure 2b, while the blade, that rests with its weight on the turion, compresses the same realizing the desired separation between pulpy and fibrous parts; also this compression rate is controlled by the operator by means of a viscous hydraulic regulator in order to obtain an appropriate discharge of the removed substance and avoid sample tears.

Since the blade compression action on the turion is a function of the diameter of the same, it is necessary not only to carry out the asparagus calibration before starting the trials, but also to select the weight to be applied on the blade.

For this purpose, on the blade upper rim there is a metallic stem able to house a series of metallic disks 7 that can be added and combined in order to modify their weight and to obtain a complete and optimal separation of the pulp.

A series of trials has demonstrated how the angle of incidence of the blade final part with respect to the sliding slide equal to 45°, in the anticlockwise direction, gives higher consistency in the separation effect, avoiding stop and sample tears.

At the end of the trial, the asparagus fibrous part will remain attached to the tweezers on the longitudinal slide and will be removed by the operator, on the contrary the pulpy part will fall and be collected in a small basin positioned below the slide end. Both parts will be afterward weighted for calculating the reciprocal percentage incidence.

### Method for the determination of the edible part quantity

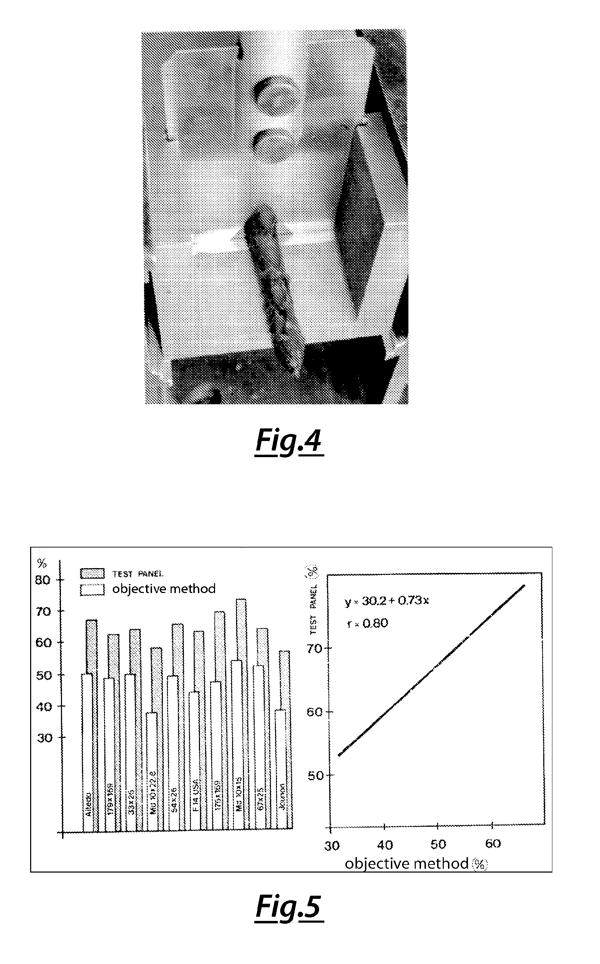

The fibrousity determinations have been, until now, done on crude turions by means of shearing stress detection (figure 4). Such measurement includes the resistance exerted by the fibrous part and by the edible portion mixed up with it.

The innovation of the proposed method is, in particular, given by the measurement carried out on the cooked product. The action of the blade 3, in the method according to the invention, doesn't carry out a cut, but a combined pressure with the turion dragging by action of the slide 1, so as to have a net separation of the fibrous part from the edible one. Said operations perfectly simulate what is done by the consumer, as demonstrated in the following.

Trials have been carried out with both white and green asparagus, that have shown a good correlation with the evaluations done by sensorial tests.

Concerning green asparagus, turions of 10 samples have been dissected at a distance of 150 mm from the apex and then calibrated. The cooking has been carried out in water having 1% of salts. The determination of the eatable part has been carried out by a group of 8 tasters and by means of the edible-meter on whose blade a 2 kg weight has been positioned.

Taking into account figure 5, the statistic data elaboration and the control of the Tukey test have shown the existance of a high correlation between the two adopte methods and the validity of the edible part objective determination.

Data obtained with different caliber asparagus have demonstrated a strict correlation with the dimensions of the turions. So, in order to have reliable data, it is necessary to operate with turions having the same caliber since the weight to be applied on the blade depends on the turions dimensions and for this reason it is necessary to test it on preliminary trials.

In comparative trials between the shearing stress, the edible-meter and the sensorial test, it appears that with the shearing stress, on crude samples, values of 83,30% have been obtained with respect to the sensorial test, while using the edible-meter, on cooked samples, values have been obtained which are closer to the sensorial test and equal to 96,94%.

Tests have been performed also on white asparaguses.

The eatable part of white asparagus is sensibly smaller than the green asparagus one. In the firsts this value is, on average, equal to about 6% of the turion, whereas in the green asparagus these values are about 50%.

Taking into account the following table, the trials have been carried out on three different varieties, adopting the same method previously described for green asparagus, and don't have shown statistically significant differences (significance index P<0,05%).

| CULTIVAR | PANEL | EDIBLE-METER |
|---|---|---|
| | | |
| GIJMLIN | 6,32 a | 3,48 a |
| | | |
| GLADIO | 5,86 b | 3,19b |
| | | |
| EROS | 5,53 b | 3,06 b |
| | | |

The reasons for utilizing this method consist in the fact that the eatable product percentage can be taken as a valid index for pursuing different objectives by two different potential users:
1) the "breeders", for obtaining the new variety structures screening;
2) the producers, for improving the productions destined to both the fresh market and the transformation industry one, by differencing the product on the basis of the usable raw material quantity.

The device according to the invention permits to render objective the edible portion determination releasing it from a subjective interpretation, since it doesn't require a demanding and heavy work of tasters groups. In addition, it permits to do, in a simply, quick and economical manner, the control of a great number measurements.

With respect to the shearing stress utilized in the previous technique, obtained operating on crude asparagus by means of a net separation of the two turion parts, without a precise distinction between fibrous and pulpy parts, the edible-meter, operating on cooked asparagus, having namely the same characteristics of the asparagus submitted to the sensorial test, separates in an almost precise manner the fibrous part from the edible one. By this method the error possibilities sensibly diminish, as well as the differences between obtained data.

### Bibliography

[1] Kramer, A., R. C. Wiley, B. A. Twigg, R. W. Decker, A. P. Sidwell, 1960. The measurement of fibrousness of asparagus. Proceedings of American Society of Horticultural Science No.76, p. 382-388.
[2] Werner G., Meschter E.E., Lacey H., Kramer A., 1963 - Use of shear-press in determining fibrousness of raw and canned green asparagus. Journal of Food Technology No. 17, p. 81-86.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Device for determining the percentage of the edible portion of a long and narrow fibrous food, utilising a blade (3) pressing with its cutting side on the fibrous food fixed on a support surface (9) from above with respect to said support surface, **characterised in that:**
- said support surface (9) is fixed on a slide (1) that is longitudinally slidable along a predetermined direction of the plane including the same support surface (9);
- there are comprised driving means of said slide (1);
- there are comprised driving means of said blade (3), that are suitable to move away from said fibrous food, or to bring it nearer to said fibrous food till the blade exerts, on the fibrous part, a force such to compress it without cutting it;
said driving means of said slide (1) and said driving means of said blade (3) being suitable to act simultaneously so that the blade (3) slides on said fibrous food till it arrives to the edible part and separates it by pulling it from the rest of the fibrous food.

2. Device according to claim 1, **characterised in that** said fibrous food is fixed on said slide (1) by means of a toothed clamp (2) that clamps it on the rear fibrous part.

3. Device according to claim 1 or 2, **characterised in that** said driving means of the slide (1) are automatic-operated means, being further comprised hand-operated driving slide (1) comprising a crank, gear and rack device (5).

4. Device according to any claim 1 to 3, **characterised in that**, on the blade (3) edge opposite to the end facing said support surface (9), there are provided means suitable to house a series of weights (7) that can be varied in number and combined to modify the total weight of the blade, to adapt the pressure exerted as a function of the analyzed fibrous food type.

5. Device according to any claim 1 to 4, **characterised in that** said blade (3) presses on the fibrous food with a blade end-part incidence angle of around 45° with respect to the slide (1), calculated anti-clockwise.

6. Device according to any claim 1 to 5, **characterised in that** said fibrous food is an un asparagus.

7. Method for determining the percentage of the edible portion of a long and narrow fibrous food, utilising a blade (3) pressing with its cutting side on the fibrous food fixed on a support surface (9), **characterised in that** it performs the following steps:
A. making the blade (3) press, from above with respect to the support surface (9), on said fibrous food, exerting a pressure such to avoid the cut of the fibrous food;
B. dragging said support surface (9) along an horizontal direction in the geometrical plane of the support surface (9) till said blade arrives at the edible part and detaches it from the rest of the fibrous food.

8. Method according to claim 7, **characterised in that** it is executed on an asparagus.

9. Method according to claim 7 o 8, **characterised in that** said blade (3) presses on the fibrous food with a negative incidence angle.

10. Method according to claim 9, **characterised in that** said negative incidence angle is of about 45°.
